# FASCICULE DE BREVET EUROPEEN

(11) **EP 3 253 589 B1**
(45) Date de publication et mention de la délivrance du brevet: **13.12.2023**
(21) Numéro de dépôt: 16705252.1
(22) Date de dépôt: 03.02.2016
(51) Int. Cl.: B44C 5/04

(54) **STRATIFIÉ DÉCORATIF**
DEKORATIVES LAMINAT
DECORATIVE LAMINATE

(30) Priorité: 04.02.2015 FR 1550861
(43) Date de publication de la demande: 13.12.2017
(73) Titulaire: Polyrey, 24150 Baneuil (FR)
(72) Inventeur: WLOCZYSIAK, Philippe, 24150 Baneuil (FR); FERRANDEZ, Anne Claire, 24150 Baneuil (FR)
(74) Mandataire: Cabinet Beau de Loménie
(86) Numéro de dépôt international: PCT/FR2016/050222
(87) Numéro de publication internationale: WO 2016/124855

(56) Documents cités:
- EP-A2- 0 122 396
- WO-A1-00/41883
- WO-A1-02/04208
- WO-A1-2007/028792
- US-A- 4 088 807
- US-A- 4 456 747
- US-A- 4 528 344

## Description

### Domaine technique de l'invention

La présente invention concerne le domaine des stratifiés décoratifs. Plus particulièrement, l'invention concerne un stratifié comprenant un noyau revêtu sur au moins l'une de ses faces par une feuille décorative imprégnée d'un mélange constitué d'une résine mélamine alkylée réticulée avec une résine polyol-acrylique possédant au moins deux fonctions hydroxyles.

### Etat de la technique

Les stratifiés décoratifs sont utilisés pour de très nombreuses applications dans le secteur du bâtiment, de l'agencement et de l'ameublement.

Ces stratifiés se présentent habituellement sous la forme d'une plaque qui comporte généralement une partie nommée noyau, formée d'un assemblage de couches ou feuilles superposées en matériau de fibre cellulosique (le plus souvent du papier kraft) imprégnées de résines thermodurcissables et liées ensemble par un procédé à haute pression. Ce procédé à haute pression est défini comme une application simultanée de chaleur et d'une haute pression spécifique pour permettre le fluage puis la polycondensation des résines thermodurcissables et obtenir un matériau homogène non poreux de masse volumique accrue (≥ 1,35 g/cm³) ayant la finition de surface requise. La (ou les) couches constitutives de la couche décorative présentent des couleurs ou des motifs décoratifs, et sont imprégnées de résine mélamine et/ou recouvertes d'un revêtement de surface imprégné de résine mélamine.

Cependant la surface mélamine des stratifiés décoratifs est susceptible d'être dégradée par la lumière et l'exposition à l'humidité et à l'eau. La dégradation provoque un affadissement des couleurs, voire un craquellement de la surface mélamine, ce qui rend les stratifiés décoratifs non résistants, ou résistants uniquement à court terme pour des applications extérieures de type bardage de façade, mobilier extérieur, etc.

Afin d'améliorer ces propriétés de tenue au vieillissement dû aux UV et à l'humidité, différentes technologies sont utilisées. Une de ces technologies consiste à appliquer un film acrylique de type PMMA (polyméthacrylate de méthyle) ou PMMA/PVDF (polyfluorure de vinylidène) sur la surface mélamine.

Ce film est empilé puis stratifié avec les composants du panneau stratifié décoratif afin de former une couche de protection à la surface du panneau. Ce film apporte des propriétés accrues en termes de vieillissement et décoloration à la lumière. Cependant ces films sont fragiles à la rayure et à l'abrasion et se dégradent sous l'effet des solvants susceptibles d'être utilisés pour le nettoyage des panneaux. De plus ces films sont coûteux.

Une autre technologie est l'application d'un revêtement acrylique sur la feuille décorative ou sur les panneaux finis. Le revêtement est polymérisé par radiation UV ou par faisceau d'électrons. Ce revêtement permet d'améliorer la tenue au vieillissement et à la décoloration sous l'effet de la lumière, et apporte de bonnes résistances de surface (rayure, abrasion, tenue aux solvants). Cependant cette technologie est complexe, avec nécessité de travailler sous atmosphère contrôlée, et contraignante en termes d'hygiène et sécurité. De plus cette technologie est limitée en termes de motifs puisqu'elle permet uniquement de travailler avec des décors unis dans le cas où elle est appliquée sur le produit fini, elle est limitée en termes de structure de surface, et elle est coûteuse.

Une autre technologie, décrite dans la demande de brevet US 2003/0003257, consiste à appliquer une couche de protection acrylique-uréthane avec amorceur radicalaire en milieu organique sur la surface d'un stratifié via une feuille démoulante. Cette technologie pose des problèmes d'hygiène et de sécurité lors de sa mise en production par l'usage de systèmes en milieu organique.

Une autre technologie, décrite dans la demande de brevet EP-A-122 396, consiste à 1) imprégner le noyau avec un mélange thermodurcissable d'une résine phénol/formaldéhyde, d'une résine acrylique réticulée et éventuellement d'une résine mélamine/formaldéhyde, et 2) imprégner la feuille décorative dans un premier temps avec un mélange d'une résine mélamine/formaldéhyde et d'une résine acrylique réticulée, puis, dans un deuxième temps, avec une mélange de résine mélamine/formaldéhyde et de particules abrasives.

Une autre technologie, décrite dans la demande de brevet WO 97/49746, consiste à appliquer une couche à base de polyuréthane acrylate et d'un durcisseur isocyanate. La présence dans le revêtement d'isocyanate est un facteur limitant en raison de son coût et de sa toxicité.

Enfin, une autre technologie est la formation d'un film de type vernis composé d'agents de réticulation aminoplaste et/ou isocyanate, qui forme un réseau polymère tridimensionnel avec le liant polyol acrylique. Le sous-produit de la réaction est un alcool primaire, qui est éliminé par séchage (thermique, IR...). La modification de la résine mélamine par des fonctions alcools et plus particulièrement par des polyols a été utilisée, en particulier dans le domaine des vernis et peinture, pour donner une résistance aux rayonnements ultraviolets aux matériaux mélaminés. Ces systèmes ont l'avantage d'être compétitifs en terme de coût, mais ne peuvent pas être appliqués simplement au procédé de haute pression des stratifiés décoratifs, en particulier parce que l'élimination du sous-produit alcool primaire ne peut se faire dans des procédés sous pression.

Un premier objectif de l'invention vise à apporter une résistance au vieillissement et à la décoloration de la surface des stratifiés décoratifs liée à l'exposition aux UV et aux conditions hygrométriques en usage extérieur.

Un autre objectif de l'invention est de conserver une bonne résistance aux dommages (rayures, nettoyage) des stratifiés décoratifs.

Un autre objectif de l'invention est de produire des stratifiés décoratifs ayant un large choix de décors et de structures de surface.

Un autre objectif de l'invention est de préparer des stratifiés décoratifs résistants aux conditions extérieures en maîtrisant les coûts de fabrication tout en respectant les meilleures conditions d'hygiène et sécurité.

### Brève description de l'invention

La présente invention concerne donc, selon un premier aspect, un stratifié décoratif comprenant un noyau associé sur au moins l'une de ses faces à une feuille imprégnée d'un mélange constitué d'une résine mélamine alkylée réticulée avec une résine polyol-acrylique possédant au moins deux fonctions hydroxyles et jusqu'à 5% en masse, par rapport à la masse totale du mélange, d'un ou plusieurs additifs choisis parmi les agents anti-UV, les antioxydants et les tensioactifs, ledit noyau n'étant pas imprégné par une autre résine que la résine phénolique. Dans un mode de réalisation de l'invention, la feuille imprégnée d'un mélange de résine mélamine alkylée et de résine polyol-acrylique est une feuille décorative. Dans un autre mode de réalisation cette feuille imprégnée est une feuille de protection.

L'invention concerne par ailleurs, selon un deuxième aspect, un procédé de préparation d'un tel stratifié décoratif. Avantageusement, la stratification est réalisée par thermocompression, le plus souvent dans une presse.

L'invention concerne également, selon un troisième aspect, l'utilisation d'un tel stratifié décoratif en tant que matériau rigide ou contrecollé sur un support à base de bois, plâtre ou métal, pour le revêtement de façade de bâtiment, ou le revêtement mural, de cloison, de paroi de cabines sanitaires, de plans de travail, ou de mobilier à usage intérieur ou extérieur.

### Description des figures

La Figure 1A représente un stratifié 10 selon l'invention, comprenant un noyau 1 revêtu sur l'une de ses faces par une feuille 2 imprégnée d'un mélange de résine mélamine alkylée et de résine polyol-acrylique.
La Figure 1B représente un stratifié 100 selon l'invention, comprenant un noyau 1 revêtu sur chacune de ses faces par une feuille 2 imprégnée d'un mélange de résine mélamine alkylée et de résine polyol-acrylique.
La Figure 2 représente un stratifié 20 selon l'invention, comprenant un noyau 1 revêtu sur chacune de ses faces par une feuille 3 imprégnée de résine mélamine, chaque feuille 3 étant elle-même revêtue d'une feuille 2 imprégnée d'un mélange de résine mélamine alkylée et de résine polyol-acrylique.
La Figure 3 représente un stratifié 30 selon l'invention, comprenant un noyau 1 revêtu sur chacune de ses faces par une feuille 3 imprégnée de résine mélamine, chaque feuille 3 étant elle-même recouverte d'une feuille de protection 4, imprégnée d'un mélange de résine mélamine alkylée et de résine polyol-acrylique.

### Description détaillée de l'invention

La présente invention a pour objet, selon un premier aspect, un stratifié décoratif (10,100,20,30) comprenant un noyau (1) associé sur au moins l'une de ses faces à une feuille (2,4) imprégnée d'un mélange constitué d'une résine mélamine alkylée réticulée avec une résine polyol-acrylique possédant au moins deux fonctions hydroxyles et jusqu'à 5% en masse, par rapport à la masse totale du mélange, d'un ou plusieurs additifs choisis parmi les agents anti-UV, les antioxydants et les tensioactifs, ledit noyau (1) n'étant pas imprégné par une autre résine que la résine phénolique.

De manière conventionnelle, le noyau est formé d'un assemblage de couches ou feuilles superposées en matériau fibreux cellulosique, le plus souvent en papier kraft, les couches ou feuilles constituant le noyau étant imprégnées de résine phénolique notamment de type résol (phénol-formaldéhyde). Conformément à l'invention, le noyau n'est pas imprégné par une autre résine que la résine phénolique. Le noyau peut être de qualité standard, postformable ou ininflammable. Il est préparé par des étapes de mises en contacts de papier Kraft avec la résine phénolique suivi d'une étape de séchage (typiquement, à une température de 80 à 150°C) qui a pour but, d'une part d'éliminer une partie des matières volatiles, et, d'autre part, de poursuivre l'étape de polymérisation.

Le noyau est associé sur au moins l'une de ses faces à une feuille (2,4) imprégnée d'un mélange de résine mélamine alkylée et de résine polyol-acrylique. Conformément à l'invention, le mélange dont est imprégnée la feuille (2,4) ne comprend pas d'autres résines que la résine mélamine alkylée et la résine polyol-acrylique susmentionnées. On entend par mélamine alkylée un composé de formule : 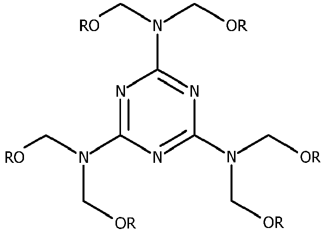 dans laquelle R représente un méthyle ou un butyle.

La mélamine est réticulée à l'aide d'un polyol acrylate possédant au moins deux fonctions hydroxyles selon le schéma ci-dessous dans lequel, à titre illustratif, la mélamine est méthylée :

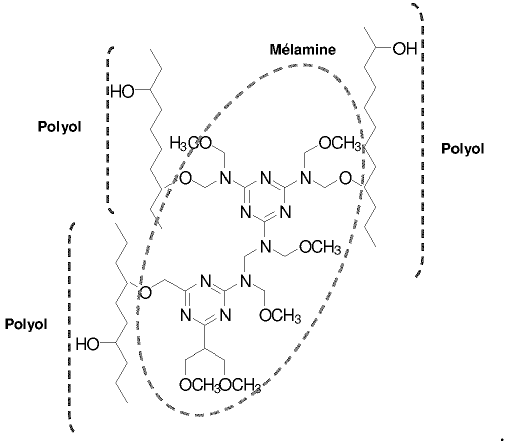

De manière avantageuse, la résine mélamine alkylée et la résine polyol-acrylique sont mélangées dans un rapport massique allant de 1 à 5, de préférence de 1 à 3.

La résine mélamine alkylée possède de préférence une viscosité dynamique, mesurée à 23°C selon la norme ISO 3219, allant d'environ 5000 à environ 16000 mPa.s, notamment d'environ 6000 à environ 12000 mPa.s. A titre d'exemples de résine mélamine alkylée susceptible d'être utilisée dans le cadre de l'invention, on peut citer celles commercialisées par la société Allnex sous la dénomination Cymel^{®}.

La résine polyol-acrylique possède de préférence une viscosité dynamique, mesurée à 23°C selon la norme ISO 3219, allant d'environ 400 à environ 1500 mPa.s, notamment d'environ 500 à environ 1000 mPa.s. A titre d'exemples de résine polyol acrylique susceptible d'être utilisée dans le cadre de l'invention, on peut citer celles commercialisées par la société Bayer sous la dénomination Bayhydrol^{®} A145.

Le mélange de résine mélamine alkylée et de résine polyol-acrylique a avantageusement une viscosité, mesurée à 23°C avec un viscosimètre Brookfield, allant de 50 à 500 mPa.s. Si nécessaire, cette viscosité est ajustée par dilution.

Typiquement, une fois la feuille (2,4) imprégnée avec le mélange de résine mélamine alkylée et de résine polyol-acrylique, la quantité de résine mélamine alkylée déposée est de l'ordre d'environ 12 à environ 45 g/m² liquide, et la quantité de résine polyol-acrylique déposée est de l'ordre d'environ 25 à environ 75 g/m² liquide. La feuille (2,4) présente elle un grammage d'environ 200 à environ 450 g/m².

Le mélange de résine mélamine alkylée et de résine polyol-acrylique contient jusqu'à 5% en masse, par rapport à la masse totale du mélange, d'un ou plusieurs additifs choisis parmi les agents anti-UV, les antioxydants et les tensioactifs.

Parmi les agents anti-UV susceptibles d'être utilisés dans le cadre de l'invention, on peut citer :
- les absorbeurs UV, qui sont des substances organiques à base d'hydroxybenzophénone ou de benzotriazole,
- les « quenchers », qui sont des composés organiques (à base de complexes de nickel) capables de désactiver les états excités créés par les rayons ultraviolets,
- les inhibiteurs radicalaires tels que les amines HALS (de l'anglais « Hindered Amine Light Stabilizer ») ou les dérivés de S-triazine,
- les pigments absorbants, qui sont fortement réfléchissants dans l'ultraviolet, comme le dioxyde de titane.

Parmi les antioxydants susceptibles d'être utilisés dans le cadre de l'invention, on peut citer :
- les antioxydants de classe primaire (composés phénoliques) qui agissent sur les étapes de scission radicalaire,
- les antioxydants de classe secondaire (composés à base de phosphites) qui décomposent les hydroperoxydes.

Parmi les tensioactifs susceptibles d'être utilisés dans le cadre de l'invention, on peut citer :
- les polysiloxanes modifiés, qui diminuent la tension superficielle et donnent un meilleur lissage (tendu) de la surface du film tout en évitant la formation de cratères, de craquelures et l'apparition de phénomènes de «peau d'orange»,
- les polyacrylates siloxanés, qui augmentent le mouillage du substrat lors de l'application d'une couche sur l'autre,
- les copolymères acryliques, qui sont des agents de dégazage/débullage.

De manière avantageuse, le mélange de résine mélamine alkylée et de résine polyol-acrylique contient un ou plusieurs agents anti-UV, en une quantité maximale de 5% en masse par rapport à la masse totale du mélange.

Dans un mode de réalisation de l'invention, le noyau (1) est revêtu sur l'une de ses faces par une feuille (2).

Dans un autre mode de réalisation de l'invention, le noyau (1) est revêtu sur chacune de ses faces par une feuille (2).

Dans un autre mode de réalisation de l'invention, le noyau (1) est revêtu sur au moins l'une de ses faces par une feuille (3), imprégnée de résine mélamine, et cette feuille (3) est elle-même revêtue par une feuille (2). Dans une variante de l'invention, la feuille (2) est une feuille décorative, et la feuille (3) n'est pas une feuille décorative. Le décor de la feuille (2) peut être uni, de couleur, ou correspondre à un motif ou dessin. Tout type de couche décorative couramment utilisée dans le domaine de l'invention pourra être mis en oeuvre. On pourra, par exemple, utiliser un papier uni ou un papier portant un décor rapporté. De manière avantageuse, la feuille (2) est pré-imprégnée de résine mélamine avant d'être imprégnée de mélange de résine mélamine alkylée et de résine polyol-acrylique.

Dans un autre mode de réalisation de l'invention, le noyau (1) est revêtu sur au moins l'une de ses faces par une feuille (3), imprégnée de résine mélamine, et cette feuille (3) est elle-même revêtue par une feuille (4). Dans une variante de l'invention, la feuille (4) est une feuille de protection, et la feuille (3) est une feuille décorative telle que définie ci-dessus. La feuille de protection (4) est avantageusement un papier de faible grammage, nommé "overlay". Un tel papier forme une couche transparente et permet d'obtenir une très bonne réflexion de l'impression du décor présent sur la feuille décorative (3).

Dans ces deux derniers modes de réalisation, la quantité de résine mélamine déposée sur la feuille (3) est de l'ordre d'environ 60 à 100 g/m². Parmi les résines mélamine susceptibles d'être utilisées pour pré-imprégner la feuille (2) et imprégner la feuille (3), on peut citer les résines hydroxylées.

Quel que soit le mode de réalisation de l'invention le noyau (1) représente avantageusement au moins 90%, de préférence au moins 95% en masse de la masse totale du stratifié décoratif.

Les stratifiés décoratifs, conformes à l'invention, peuvent être préparés par stratification sous haute pression. De manière générale, leur procédé de préparation s'effectue en quatre étapes :
- l'imprégnation,
- l'empilage,
- la stratification,
- la finition.

L'imprégnation consiste à introduire la résine appropriée dans les différentes couches devant être imprégnées, à savoir le noyau (1), le cas échéant la feuille (3), et la feuille (2) ou (4).

L'imprégnateur est constitué d'une tête appelée dévidoir permettant de dérouler les bobines de papier, d'une tête d'imprégnation qui comporte une cuve de réception de la résine et un système permettant de quantifier la quantité de résine que l'on souhaite introduire par m², d'un séchoir qui élimine la quantité de solvant apportée par la résine et d'un système qui met le support imprégné sous forme de feuilles ou de bobines.

Le séchage des feuilles imprégnées est avantageusement réalisé à une température d'environ 110°C à environ 150°C, pendant un temps de séchage allant d'environ 2 min à environ 8 min.

L'empilage consiste à superposer les différents éléments constitutifs du stratifié : le noyau (1), éventuellement la (les) feuille(s) (3), et la (les) feuille(s) (2,4).

La stratification permet d'assembler les différents éléments et est réalisée par thermocompression, le plus souvent dans une presse. La stratification est, avantageusement, réalisée à une température d'environ 130°C à environ 160°C. La pression appliquée est, de préférence, d'environ 20 à environ 80 bars (2×10³ à 8×10³ MPa).

Une étape de finition consistant en une opération de découpe des bordures du stratifié obtenu, est, le plus souvent réalisée, pour mettre le stratifié décoratif au format final.

La résistance au vieillissement photochimique des stratifiés conformes à l'invention a été évaluées à l'aide des méthodes suivantes.

SEPAP : équivalent à 1,5 UV solaire en irradiance. Une analyses des échantillons est réalisée après 165 - 300 - 443 - 650 - 800 - 1050 - 1200 - 1600 h avec trempage périodique dans l'eau à 60 °C pendant 2 h ce qui permet d'étudier l'hydrolyse des produits d'oxydation. Cette analyse est couplée avec une analyses IRTF-PAS afin d'identifier les fonctions chimiques hydrolysées.

WOM : équivalent à 1 UV solaire en irradiance. La température des panneaux noirs est à 65 °C (selon l'ISO 4892-2), le cycle est fixé à 102 min irradiance / 18 min aspersion sous irradiance. Comme précédemment, cette analyse est couplée avec une analyse IRTF-PAS.

Analyse IRTF (de l'anglais « Fourier Transformed InfraRed Spectroscopy ») ou Spectroscopie Infrarouge à Transformée de Fourier (FTIR). Elle est basée sur l'absorption d'un rayonnement infrarouge par le matériau analysé. Elle permet via la détection des vibrations caractéristiques des liaisons chimiques, d'effectuer l'analyse des fonctions chimiques oxydées au cours de l'exposition en SEPAP et WOM. La vitesse d'oxydation est mesurée à partir de l'accumulation des produits d'oxydation carbonylés qui développent une absorption IR à 1705 cm⁻¹. Pour des échantillons opaques, c'est une analyse en spectroscopie photo acoustique (IRTF-PAS) qui est utilisée.

Les stratifiés décoratifs, conformes à l'invention, présentent les avantages suivants :
- Tenue au vieillissement conforme à la norme EN438-6 en terme de tenue au vieillissement.
- Maintien des propriétés de résistance aux dommages de la surface lors de la mise en oeuvre des produits (rayures) et de sa vie en oeuvre (nettoyage).
- Maintien de la fonction décorative du stratifié avec usage d'un large choix de décors et de structures de surface.
- Simplicité de production avec le procédé haute pression tel que défini pour la production des stratifiés décoratifs.
- Compétitivité en termes de coût du produit fini.
- Utilisation de système en milieu aqueux pour de bonnes conditions d'hygiène et sécurité.

L'invention est illustrée par l'exemple suivant, donné à titre indicatif.

### Exemple

On utilise une feuille de papier décoratif de 80 g/m², destinée à constituer la surface décorative du stratifié dé coratif. Cette feuille de papier est pré-imprégnée de résine mélamine de type hydroxylée, à un taux de charge de 44-46% en poids sur la masse totale sèche de la feuille imprégnée, avec 5,5-6,5% de volatils.

Puis cette feuille est imprégnée, à l'aide d'un mayerbarre, d'un mélange de résine polyol (commercialisée par la société Bayer sous la dénomination Bayhydrol^{®} A 145 - viscosité de 950 mPa.s mesurée à 23°C selon la norme ISO 3219) et de résine mélamine alkylée (commercialisée par la société Allnex sous la dénomination Cymel^{®} 327 Resin - viscosité de 9900 mPa.s mesurée à 23°C selon la norme ISO 3219), dans une quantité de 100 à 200 g/m² liquide. Ce mélange de résine polyol et de résine mélamine alkylée se caractérise par une viscosité après dilution, mesurée à 23°C avec un viscosimètre Brookfield, de 500 +/- 100 mPa.s, un rapport massique de 3, un extrait sec de 45 %, et contient 3% en masse d'absorbeur UV.

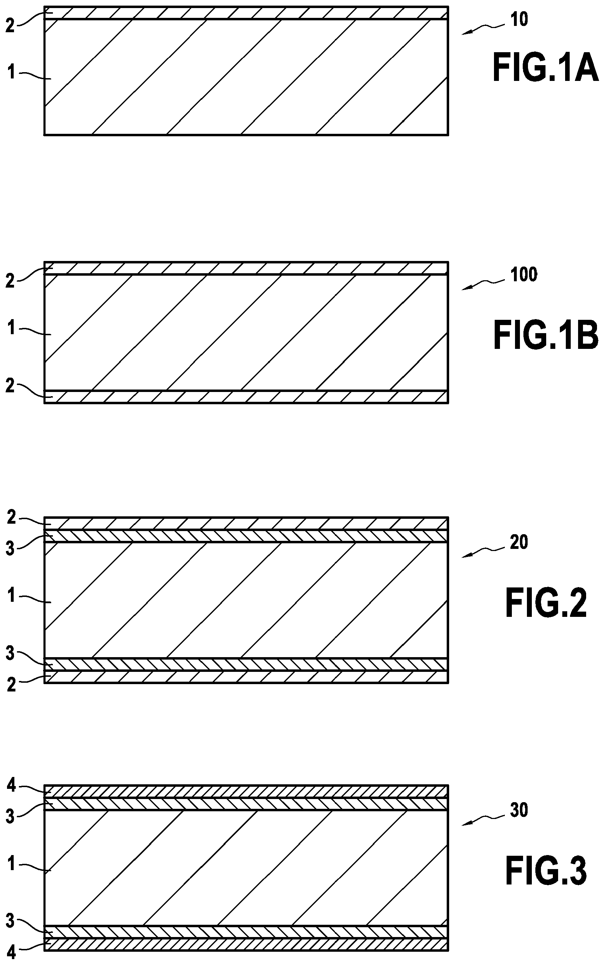

Cette feuille est enfin séchée à une température de 130°C pendant 8 minutes. Le stratifié décoratif est, alors, réalisé manuellement en empilant les feuilles ci-dessous selon le format que l'on souhaite et dans l'ordre ci-dessous, comme illustré à la Figure 1 :
- un revêtement de surface **2,** correspondant à la feuille décorative imprégnée d'un mélange de résine mélamine hydroxylée (du type aminoplaste) et d'un mélange de résine mélamine alkylée et polyol, de part et d'autre d'un noyau **1,**
- un noyau **1,** correspondant à des feuilles de kraft imprégnés de résine phénolique de type résol.

La stratification est ensuite réalisée par conduction thermique obtenue à l'aide de plateaux métallique perforés, pour permettre le passage d'un serpentin d'eau surchauffée, ces deux plateaux jouant le rôle de presse. Le cycle de cuisson du stratifié est, alors, réalisé par une montée en température à 140°C de 15 minutes, jusqu'à une température de 140 à 150°C, pendant 15 min, puis un refroidissement du stratifié. Ce cycle thermique est réalisé sous pression de 20 bars. L'étape qui suit est la finition, qui consiste à éliminer les bavures de chaque côté du stratifié. Cela est réalisé à l'aide de scie, couteau ou toupie.

Les propriétés du stratifié décoratif obtenu sont les suivantes.
- Esthétique conforme (acceptation visuelle).
- Résistance au vieillissement photochimique évaluée selon 2 méthodes d'essai :
   1/ WOM : équivalent à 1 UV solaire en irradiance ; température panneau noir 65°C. Mesure selon ISO 4892-2 ; cycle 102 min irradiance/18 min aspersion sous irradiance. La mesure colorimétrie de DeltaE après 4500 h d'exposition = 2.5, ce qui correspond à une évaluation >= 3 sur l'échelle des gris.
   2/ SEPAP : équivalent 1,5 UV solaire en irradiance, température échantillon 60°C. Trempage périodique des plaques dans de l'eau à 60°C pendant 2 heures afin d'hydrolyser les produits d'oxydation.
   Mesure colorimétrie de DeltaE après 3000 h d'exposition = 1, ce qui correspond à une évaluation >= 3 sur l'échelle des gris.
- Résistance aux produits de nettoyage type solvant : résistance mesurée grade 4 (faible changement visible seulement sous certains angles) selon le test à l'acétone décrit dans la norme EN438-2-26.
- Résistance aux rayures : mesurée à 2N selon la norme EN438-2-25.

## Revendications

1. Stratifié décoratif comprenant un noyau (1) imprégné d'une résine phénolique, associé sur au moins l'une de ses faces à une feuille (2,4) imprégnée d'un mélange constitué d'une résine mélamine alkylée réticulée avec une résine polyol-acrylique possédant au moins deux fonctions hydroxyles et jusqu'à 5% en masse, par rapport à la masse totale du mélange, d'un ou plusieurs additifs choisis parmi les agents anti-UV, les antioxydants et les tensioactifs, ledit noyau (1) n'étant pas imprégné par une autre résine que la résine phénolique.

2. Stratifié décoratif selon la revendication 1, dans lequel le rapport massique entre la résine mélamine alkylée et la résine polyol-acrylique dans ledit mélange est de 1 à 5, de préférence de 1 à 3.

3. Stratifié décoratif selon la revendication 1 ou 2, dans lequel le mélange de résine mélamine alkylée et de résine polyol-acrylique a une viscosité, mesurée à 23°C selon la norme ISO 3219, allant de 50 à 500 mPa.s.

4. Stratifié décoratif selon l'une des revendications 1 à 3, dans lequel la feuille (2,4) présente un grammage de 200 à 450 g/m².

5. Stratifié décoratif selon l'une des revendications 1 à 4, dans lequel le noyau (1) représente au moins 90% en masse de la masse totale du stratifié.

6. Stratifié décoratif selon l'une des revendications 1 à 5, dans lequel le noyau (1) est revêtu sur l'une de ses faces par une feuille (2).

7. Stratifié décoratif selon l'une des revendications 1 à 5, dans lequel le noyau (1) est revêtu sur chacune de ses faces par une feuille (2).

8. Stratifié décoratif selon l'une des revendications 1 à 5, dans lequel le noyau (1) est revêtu sur au moins l'une de ses faces par une feuille (3), imprégnée de résine mélamine, cette feuille (3) étant elle-même revêtue par une feuille (2).

9. Stratifié décoratif selon la revendication 8, dans lequel la feuille (2) est une feuille décorative, et la feuille (3) n'est pas une feuille décorative.

10. Stratifié décoratif selon l'une des revendications 1 à 5, dans lequel le noyau (1) est revêtu sur au moins l'une de ses faces par une feuille (3), imprégnée de résine mélamine, cette feuille (3) étant elle-même revêtue par une feuille (4).

11. Stratifié décoratif selon la revendication 10, dans lequel la feuille (4) est une feuille de protection, et la feuille (3) est une feuille décorative.

12. Procédé de préparation d'un stratifié décoratif tel que défini dans l'une des revendications 1 à 11, qui comprend les étapes suivantes :
- empilement du noyau et de la / des feuille(s) ;
- assemblage de l'empilement sous pression.

13. Procédé selon la revendication 12, dans lequel l'assemblage est réalisé à une température allant de 130 à 160°C.

14. Procédé selon la revendication 12 ou la revendication 13, dans lequel l'assemblage est réalisé à une pression appliquée allant de 20 à 80 bars.

15. Utilisation d'un stratifié décoratif selon l'une des revendications 1 à 11 comme matériau rigide ou contrecollé sur un support à base de bois, plâtre ou métal, pour le revêtement de façade de bâtiment, ou le revêtement mural et de cloison, de paroi de cabines sanitaires, de plans de travail, ou de mobilier à usage intérieur ou extérieur.

## Patentansprüche

1. Dekoratives Laminat, umfassend einen mit einem Phenolharz imprägnierten Kern (1), der auf mindestens einer seiner Seiten mit einer Folie (2,4) verbunden ist, die mit einer Mischung imprägniert ist, die aus einem alkylierten Melaminharz, das mit einem Polyolacrylharz mit mindestens zwei Hydroxylfunktionen vernetzt ist, und bis zu 5 Gew-%, bezogen auf das Gesamtgewicht der Mischung, eines oder mehrerer Additive, die aus UV-Schutzmitteln, Antioxidantien und Tensiden ausgewählt sind, wobei der Kern (1) nicht mit einem anderen Harz als dem Phenolharz imprägniert ist.

2. Dekoratives Laminat nach Anspruch 1, wobei das Massenverhältnis zwischen dem alkylierten Melaminharz und dem Polyol-Acrylharz in der Mischung 1 bis 5, vorzugsweise 1 bis 3, beträgt.

3. Dekoratives Laminat nach Anspruch 1 oder 2, wobei die Mischung aus alkyliertem Melaminharz und Polyol-Acrylharz eine Viskosität, gemessen bei 23°C nach ISO 3219, von 50 bis 500 mPa.s aufweist.

4. Dekoratives Laminat nach einem der Ansprüche 1 bis 3, wobei die Folie (2,4) ein Flächengewicht von 200 bis 450 g/m² aufweist.

5. Dekoratives Laminat nach einem der Ansprüche 1 bis 4, wobei der Kern (1) mindestens 90 Gew-% des Gesamtgewicht des Laminats ausmacht.

6. Dekoratives Laminat nach einem der Ansprüche 1 bis 5, wobei der Kern (1) auf einer seiner Seiten mit einer Folie (2) beschichtet ist.

7. Dekoratives Laminat nach einem der Ansprüche 1 bis 5, wobei der Kern (1) auf jeder seiner Seiten mit einer Folie (2) beschichtet ist.

8. Dekoratives Laminat nach einem der Ansprüche 1 bis 5, wobei der Kern (1) auf mindestens einer seiner Seiten mit einer Folie (3) beschichtet ist, die mit Melaminharz imprägniert ist, wobei diese Folie (3) ihrerseits mit einer Folie (2) beschichtet ist.

9. Dekoratives Laminat nach Anspruch 8, wobei die Folie (2) eine dekorative Folie ist und die Folie (3) keine dekorative Folie ist.

10. Dekoratives Laminat nach einem der Ansprüche 1 bis 5, wobei der Kern (1) auf mindestens einer seiner Seiten mit einer Folie (3) beschichtet ist, die mit Melaminharz imprägniert ist, wobei diese Folie (3) ihrerseits mit einer Folie (4) beschichtet ist.

11. Dekoratives Laminat nach Anspruch 10, wobei die Folie (4) eine Schutzfolie ist und die Folie (3) eine dekorative Folie ist.

12. Verfahren zur Herstellung eines dekorativen Laminats wie in einem der Ansprüche 1 bis 11 definiert, das die folgenden Schritte umfasst:
- Stapeln des Kerns und der Folie(n);
- Zusammenfügen des Stapels unter Druck.

13. Verfahren nach Anspruch 12, wobei das Zusammenfügen bei einer Temperatur von 130 bis 160 °C durchgeführt wird.

14. Verfahren nach Anspruch 12 oder 13, wobei das Zusammenfügen bei einem angelegten Druck von 20 bis 80 bar durchgeführt wird.

15. Verwendung eines dekorativen Laminats nach einem der Ansprüche 1 bis 11 als starres Material oder als Kaschierung auf einem Träger auf Holz-, Gips- oder Metallbasis für die Verkleidung von Gebäudefassaden oder die Verkleidung von Wänden und Trennwänden, Wänden von Sanitärkabinen, Arbeitsplatten oder Möbeln für den Innen- oder Außengebrauch.

## Claims

1. A decorative laminate comprising a core (1) impregnated with a phenolic resin, associated on at least one of the faces thereof with a sheet (2,4) impregnated with a mixture consisting of an alkylated melamine resin crosslinked with an acrylic polyol resin having at least two hydroxyl functions, and up to 5% by weight, relative to the total weight of the mixture, of one or more additives chosen from anti-UV agents, antioxidants and surfactants, said core (1) is not impregnated with a resin other than the phenolic resin.

2. The decorative laminate of claim 1, in which the weight ratio between the alkylated melamine resin and the acrylic polyol resin in said mixture is from 1 to 5, preferably from 1 to 3.

3. The decorative laminate of claim 1 or 2, in which the mixture of alkylated melamine resin and acrylic polyol resin has a viscosity, measured at 23°C according to standard ISO 3219, ranging from 50 to 500 mPa.s.

4. The decorative laminate of one of claims 1 to 3, in which the sheet (2,4) has a grammage of 200 to 450 g/m².

5. The decorative laminate of one of claims 1 to 4, in which the core (1) represents at least 90% by weight of the total weight of the laminate.

6. The decorative laminate of claims 1 to 5, in which the core (1) is coated on one of its faces with a sheet (2).

7. The decorative laminate of one of claims 1 to 5, in which the core (1) is coated on each of its faces with a sheet (2).

8. The decorative laminate of one of claims 1 to 5, in which the core (1) is coated on at least one of its faces with a sheet (3) impregnated with melamine resin, said sheet (3) in turn being coated with a sheet (2).

9. The decorative laminate of claim 8, in which the sheet (2) is a decorative sheet, and the sheet (3) is not a decorative sheet.

10. The decorative laminate of one of claims 1 to 5, in which the core (1) is coated on at least one of its faces with a sheet (3) impregnated with melamine resin, said sheet (3) in turn being coated with a sheet (4).

11. The decorative laminate of claim 10, in which the sheet (4) is a protective sheet and the sheet (3) is a decorative sheet.

12. A process for preparing a decorative laminate as defined in one of claims 1 to 11, which comprises the following steps:
- stacking of the core and of the sheet(s);
- assembling the stack under pressure.

13. The process of claim 12, in which the assembly is carried out at a temperature ranging from 130 to 160°C.

14. The process of claim 12 or claim 13, in which the assembly is carried out at an applied pressure ranging from 20 to 80 bar.

15. Use of a decorative laminate of one of claims 1 to 11 as a rigid material or a material laminated to a support based on wood, plaster or metal, for the coating of building facades or for the coating of walls and partitions, of sanitary cabin walls, of work surfaces, or of furniture for indoor or outdoor use.
